# EUROPÄISCHE PATENTSCHRIFT

(11) **EP 3 521 106 B1**
(45) Veröffentlichungstag und Bekanntmachung des Hinweises auf die Patenterteilung: **11.11.2020**
(21) Anmeldenummer: 18155315.7
(22) Anmeldetag: 06.02.2018
(51) Int. Cl.: B60R 9/02, B65D 21/02, B65D 19/38, B65D 6/02

(54) **BEHÄLTER FÜR KRAFTFAHRZEUGE ZUR AUFNAHME UND ZUM TRANSPORT VON PALETTEN**
CONTAINER FOR MOTOR VEHICLES FOR RECEIVING AND FOR TRANSPORTING PALETTES
CONTENANT POUR VÉHICULES AUTOMOBILES PERMETTANT DE RECEVOIR ET DE TRANSPORTER DES PALETTES

(43) Veröffentlichungstag der Anmeldung: 07.08.2019
(73) Patentinhaber: FMI GmbH, 4092 Esternberg (AT)
(72) Erfinder: Froschauer, Engelbert, 4092 Esternberg (AT)
(74) Vertreter: Hübscher & Partner Patentanwälte GmbH

(56) Entgegenhaltungen:
- DE-A1- 10 358 243
- DE-A1- 19 505 193
- DE-U1- 9 110 254

## Beschreibung

Die Erfindung bezieht sich auf einen Behälter für Kraftfahrzeuge zur Aufnahme und zum Transport von Gütern, insbesondere Paletten, mit einem, mit wenigstens einem Deckel verschließbaren, quaderförmigen Mantelkörper aus sich über die Behältertiefe ersteckenden Seitenwänden, mit einem die Seitenwände verbindenden Behälterboden und mit einem die Seitenwände verbindenden Behälteroberteil, wobei dem Mantelkörper Anschlagmittel zugeordnet sind.

Bei derartigen Behältern, insbesondere Palettenstaukästen, handelt es sich um Staubehälter welche üblicherweise unter dem Hauptrahmen von Fahrzeugen, insbesondere Lastkraftfahrzeugen, Sattelauflieger, Anhänger od. dgl., in geeigneter Weise befestigt werden. In diesem zusätzlichen Stauraum können Europaletten oder andere Güter transportiert werden, ohne den eigentlichen Laderaum des Fahrzeuges zu verringern. Die Behälter sollen möglichst leicht und robust, sowie in das Fahrzeug integrierbar sein. Diese Behälter können sowohl vor den Achsen des Fahrzeuges, als auch zwischen und/oder hinter den Achsen angebracht sein.

Die Befestigung der Behälter erfolgt insbesondere mittels Schrauben, Spannpratzen, Trägerklemmen od. dgl. und Bohrungen im Mantel des Staukastens, insbesondere in Seitenwänden und/oder im Behälteroberteil mittelbar oder unmittelbar am Rahmen des Fahrzeuges. Durch besagte Bohrungen im Mantel für die Befestigung können allerdings bei mangelhafter oder beschädigter Abdichtung Wasser und Schmutz in den Behälter eindringen. Zudem muss die Montage über das Behälterinnere her erfolgen, was sich in der Praxis als umständlich und schwierig darstellt. Dauerhafte Abdichtungen der betreffenden Bohrungen sind aufgrund aggressiver Umwelteinflüsse (Salz, Sand, Wasser etc.) nur bedingt und kaum befriedigend möglich. Das Dokument DE9110254 U1 offenbart einen Behälter nach dem Oberbegriff des Anspruchs 1.

Der Erfindung liegt somit die Aufgabe zugrunde, die vorgenannten Nachteile zu vermeiden und einen Behälter anzugeben, der nicht nur sicher am Fahrzeug festlegbar ist, sondern bei dem auch ein Eindringen von Flüssigkeiten durch den Behältermantel sicher vermieden wird. Zudem soll eine einfache Montage des Staukastens von außen möglich sein.

Die Erfindung löst die gestellte Aufgabe dadurch, dass entlang des behälteroberteilseitigen Längsrandes der Seitenwand ein gegen das Behälterinnere vorspringender Randabschnitt vorgesehen ist, der behälteroberteilseitig in einen Steg übergeht, dessen Randabschnittbreite der Einsprungtiefe entspricht und dass die Anschlagmittel dem Steg zugeordnet sind.

Damit ist es möglich einen Behälter anzugeben, der nicht nur sicher am Fahrzeug festlegbar ist, sondern bei dem auch ein Eindringen von Flüssigkeiten durch den Behältermantel sicher vermieden werden kann, da die Anschlagmittel, also beispielsweise Löcher oder Langlöcher dem jeweiligen Steg zugeordnet sind und somit wieder ins freie an der Seitenwandaußenfläche münden und nicht in das Behälterinnere. Eine Abdichtung der Anschlagmittel ist somit nicht notwendig. Zudem ist damit eine einfache Montage des Staukastens von außen möglich, da Anschlagmittel, wie Schrauben oder Nieten, von der Behälterau-ßenseite her zugänglich sind.

Der Steg kann endseitig in eine zur Seitenwand hinweisende, zur Seitenwand planparallele Flanke übergehen. Damit ergibt sich eine Aussteifung des Behältermantels und zudem die Möglichkeit einer besonders vorteilhaften Deckellagerung oder eine Befestigungsmöglichkeit für andere Anbauteile.

Ist der Deckel in einer Führung zwischen einer Offen- und einer Geschlossenlage verlagerbar, die an der Flanke angeordnet ist, so ist auch die besagte Führung derart am Behältermantel befestigt, dass auch von dieser Seite her ein Eindringen von Flüssigkeiten durch den Behältermantel sicher unterbunden wird. Dazu ist die Führung, ein Führungsblech, -profil od. dgl. mit der Flanke verschraubt, vernietet oder anderweitig befestigt und dabei ebenfalls von außen am Mantelkörper montierbar.

Besonders vorteilhaft ist es, wenn der behälteroberteilseitige Längsrand der Seitenwand und der den Steg bildende Längsrand des Behälteroberteils über ein Verbindungsprofil verbunden sind, dem vorzugsweise ebenfalls Anschlagmittel in Form von Verbindungsprofil und Steg durchbrechender Löcher zugeordnet sind. Die Verbindungsprofile können jegliche geeignete Form haben, also als Kantprofil, als Strangpressprofil oder Walzprofil ausgeführt sein. Im folgenden Ausführungsbeispiel sind die Verbindungsprofile Angelhakenförmig ausgebildet. Die Abmessungen des Verbindungsprofils sind nach Maßgabe der technischen Möglichkeiten und Anforderungen an das Verbindungsprofil variabel. Das Verbindungsprofil steift den Behälter aus, vereinfacht dessen Montage und ist Teil eines besonders robusten Anschlages für den Behälter selbst, für die Führung des Deckels und/oder für andere Anbauteile. Das in den Behälter integrierte Verbindungsprofil ist vorzugsweise als Kombiprofil ausgeführt und dient einerseits der Befestigung des Behälters am Rahmen des Fahrzeuges und anderseits zusätzlich als Halterung für die Deckelführung bzw. diverser Anbauteile.

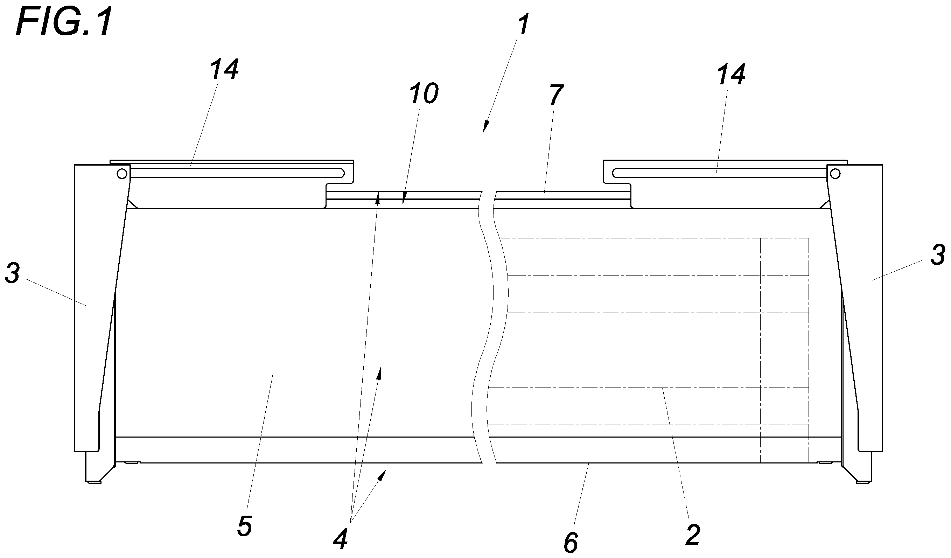

In der Zeichnung ist der Erfindungsgegenstand beispielsweise dargestellt. Es zeigen
- Fig. 1: einen Behälter für Kraftfahrzeuge zur Aufnahme und zum Transport von Paletten in Seitenansicht,

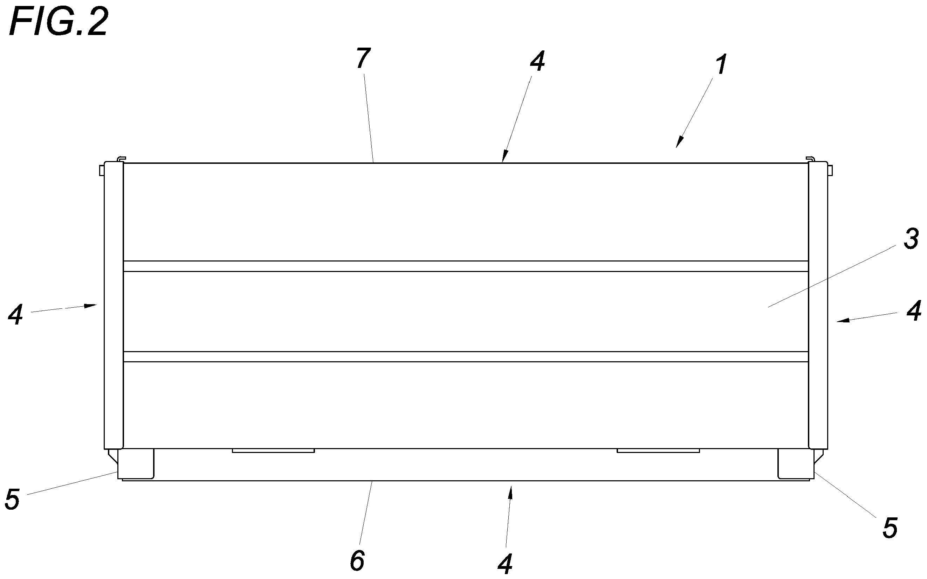

- Fig. 2: den Behälter aus Fig. 1 in Vorderansicht,

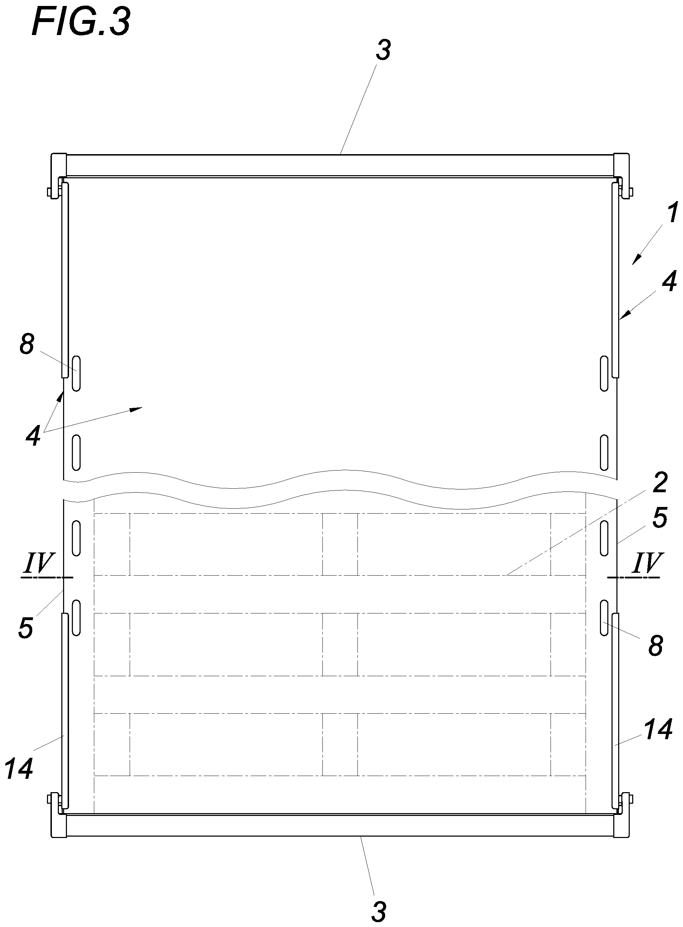

- Fig. 3: den Behälter aus Fig. 1 in Draufsicht,

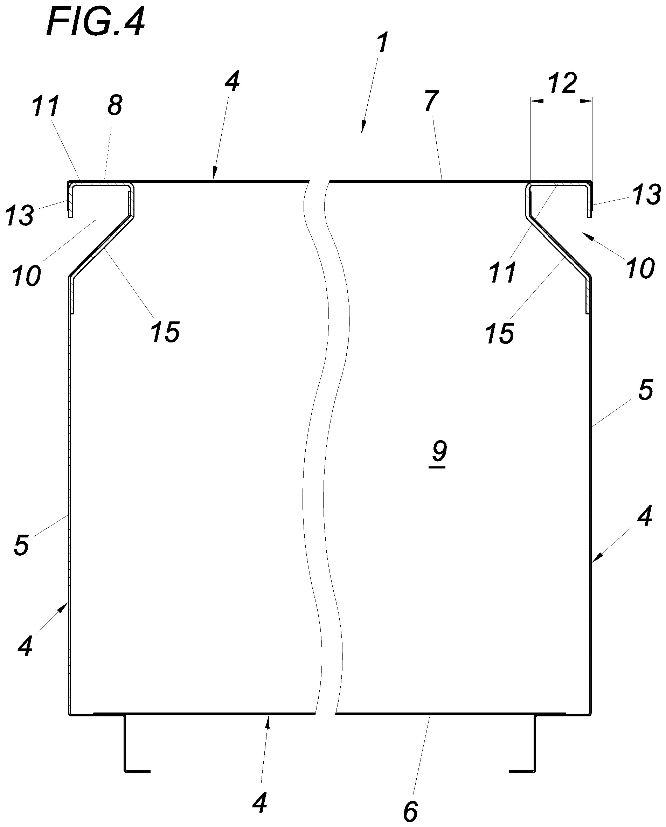

- Fig. 4: den Behälter aus Fig. 3 im Schnitt nach der Linie IV-IV und

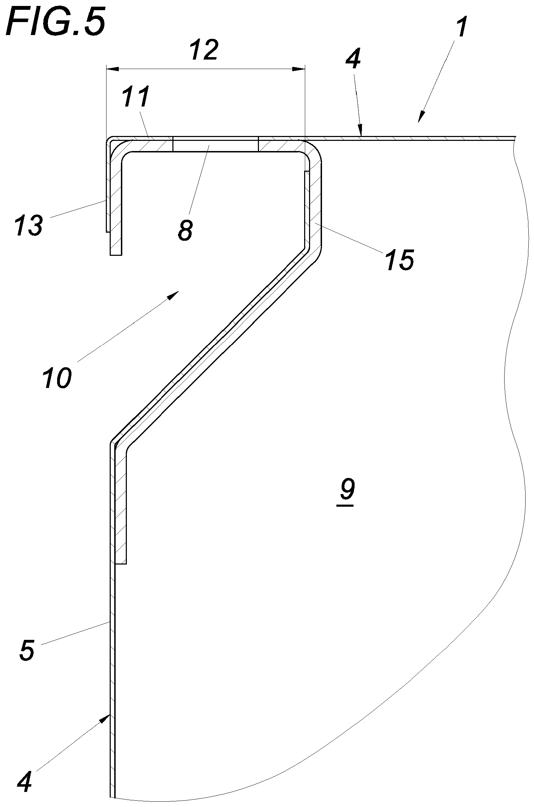

- Fig. 5: den linken oberen Eckbereich des Behälters aus Fig. 4 in vergrößertem Maßstab.

Die Erfindung betrifft einen Behälter 1 für Kraftfahrzeuge zur Aufnahme und zum Transport von Paletten 2, mit einem, mit wenigstens einem Deckel 3 verschließbaren, quaderförmigen Mantelkörper 4 aus sich über die Behältertiefe ersteckenden Seitenwänden 5, mit einem die Seitenwände 5 verbindenden Behälterboden 6 und mit einem die Seitenwände 5 verbindenden Behälteroberteil 7, wobei dem Mantelkörper 4 Anschlagmittel 8 zugeordnet sind. Der Behälter 1 ist über die Anschlagmittel 8 beispielsweise am Rahmen eines nicht dargestellten Fahrzeuges befestigt und hierbei insbesondere mit dem Rahmen, einer Befestigungskonsole od. dgl. verschraubt, vernietet oder in sonstiger geeigneter Weise verbunden.

Entlang des behälteroberteilseitigen Längsrandes der Seitenwand 5 ist ein gegen das Behälterinnere 9 vorspringender Randabschnitt 10, eine Art Falz, vorgesehen, der behälteroberteilseitig in einen Steg 11 übergeht, dessen Randabschnittbreite 12 der Einsprungtiefe entspricht. Die Anschlagmittel 8 sind den Steg 11 durchbrechende Löcher, in welche Schrauben, Nieten od. dgl. zur Befestigung des Behälters 1 am Kraftfahrzeug einsetzbar sind.

Der Steg 11 geht endseitig in eine zur Seitenwand 5 hinweisende, zur Seitenwand 5 planparallele Flanke 13 über, womit die Seitenwand ausgesteift wird.

Der Deckel 3 ist in einer Führung 14 zwischen einer Offen- und einer Geschlossenlage verlagerbar ist, die an der Flanke 13 angeordnet und befestigt ist.

Der behälteroberteilseitige Längsrand der Seitenwand 5 und der den Steg 11 bildende, sich über die Behältertiefe ersteckende Längsrand des Behälteroberteils 7 sind über ein Verbindungsprofil 15 verbunden, dem ebenfalls Anschlagmittel 8 in Form von Verbindungsprofil 15 und Steg 11 durchbrechender Löcher zugeordnet sind.

## Patentansprüche

1. Behälter (1) für Kraftfahrzeuge zur Aufnahme und zum Transport von Gütern, insbesondere Paletten (2), mit einem, mit wenigstens einem Deckel (3) verschließbaren, quaderförmigen Mantelkörper (4) aus sich über die Behältertiefe ersteckenden Seitenwänden (5), mit einem die Seitenwände (5) verbindenden Behälterboden (6) und mit einem die Seitenwände (5) verbindenden Behälteroberteil (7), wobei dem Mantelkörper (4) Anschlagmittel (8) zugeordnet sind, **dadurch gekennzeichnet, dass** entlang des behälteroberteilseitigen Längsrandes der Seitenwand (5) ein gegen das Behälterinnere (9) vorspringender Randabschnitt (10) vorgesehen ist, der behälteroberteilseitig in einen Steg (11) übergeht, dessen Randabschnittbreite (12) der Einsprungtiefe entspricht und dass die Anschlagmittel (8) dem Steg (11) zugeordnet sind.

2. Behälter nach Anspruch 1, **dadurch gekennzeichnet, dass** der Steg (11) endseitig in eine zur Seitenwand (5) hinweisende, zur Seitenwand (5) planparallele Flanke (13) übergeht.

3. Behälter nach Anspruch 2, **dadurch gekennzeichnet, dass** der Deckel (3) in einer Führung (14) zwischen einer Offen- und einer Geschlossenlage verlagerbar ist, die an der Flanke (13) angeordnet ist.

4. Behälter nach einem der Ansprüche 1 bis 3, **dadurch gekennzeichnet, dass** der behälteroberteilseitige Längsrand der Seitenwand (5) und der den Steg (11) bildende Längsrand des Behälteroberteils (7) über ein Verbindungsprofil (15) verbunden sind, dem vorzugsweise ebenfalls Anschlagmittel (8) in Form von Verbindungsprofil (15) und Steg (11) durchbrechender Löcher zugeordnet sind.

## Claims

1. Container (1) for motor vehicles for receiving and transporting goods, in particular pallets (2), having a cuboidal outer body (4) which can be closed by at least one cover (3), is formed from side walls (5) extending over the container depth, has a container floor (6) connecting the side walls (5) and has a container upper part (7) connecting the side walls (5), wherein stop means (8) are allocated to the outer body (4), **characterised in that** an edge portion (10) protruding towards the container interior (9) is provided along the longitudinal edge of the side wall (5) at the container upper side, which edge portion becomes a cross-piece (11) at the container upper side, the edge portion width (12) of which corresponds to the entry depth, and **in that** the stop means (8) are allocated to the cross-piece (11).

2. Container as claimed in claim 1, **characterised in that**, at the end, the cross-piece (11) becomes a flank (13) plane-parallel to the side wall (5) and directed towards the side wall (5).

3. Container as claimed in claim 2, **characterised in that** the cover (3) can be displaced in a guide (14) between an open position and a closed position, which guide is on the flank (13).

4. Container as claimed in any one of claims 1 to 3, **characterised in that** the longitudinal edge - at the container upper side - of the side wall (5) and the longitudinal edge - forming the cross-piece (11) - of the container upper part (7) are connected by a connecting profile (15) to which stop means (8) in the form of holes extending through connecting profile (15) and cross-piece (11) are preferably likewise allocated.

## Revendications

1. Conteneur (1) pour véhicules automobiles destiné à recevoir et à transporter des marchandises, en particulier des palettes (2), avec une enveloppe parallélépipédique (4) pouvant être fermée avec au moins un couvercle (3) et constituée de parois latérales (5) s'étendant sur la hauteur du conteneur, avec un fond de conteneur (6) reliant les parois latérales (5) et avec une partie supérieure de conteneur (7) reliant les parois latérales (5), des moyens de butée (8) étant associés à l'enveloppe (4), **caractérisé en ce que**, le long du bord longitudinal de la paroi latérale (5) situé du côté de la partie supérieure du conteneur, il est prévu une section de bord (10) faisant saillie contre l'intérieur du conteneur (9) qui se transforme du côté de la partie supérieure du conteneur en une barre (11) dont la largeur de la section de bord (12) correspond à la profondeur d'insertion et que les moyens de butée (8) sont associés à la barre (11).

2. Conteneur selon la revendication 1, **caractérisé en ce que** la barre (11) se transforme d'un côté en un flanc (13) orienté vers la paroi latérale (5) et parallèle au plan de la paroi latérale (5).

3. Conteneur selon la revendication 2, **caractérisé en ce que** le couvercle (3) peut se déplacer entre une position d'ouverture et une position de fermeture dans une glissière (14) qui est disposée sur le flanc (13).

4. Conteneur selon une des revendications 1 à 3, **caractérisé en ce que** le bord longitudinal de la paroi latéral (5) situé du côté de la partie supérieure du conteneur et le bord longitudinal de la partie supérieure du conteneur (7) formant la barre (11) sont reliés par un profil de liaison (15) auquel sont également associés de préférence des moyens de butée (8) sous la forme de trous interrompant le profil de liaison (15) et la barre (11).
